# EUROPEAN PATENT APPLICATION

(11) **EP 1 553 369 A1**
(43) Date of publication of application: **13.07.2005**
(21) Application number: 04014950.2
(22) Date of filing: 25.06.2004
(51) Int. Cl.: F26B 17/20, F26B 5/04

(54) **Resin pellet dryer**

(30) Priority: 07.01.2004 JP 2004001919; 27.02.2004 JP 2004053002
(71) Applicant: Star Seiki Co., Ltd., Nagoya-shi, Aichi-ken (JP); Star Service Co., Ltd., Komaki-shi, Aichi-ken (JP)
(72) Inventor: Okada, Kazumi, Ooaza-Honjo Komaki-shi Aichi-ken (JP)
(74) Representative: Hofstetter, Alfons J., Dr.rer.nat.

(57) **Abstract**

The present invention provides a resin pellet dryer (1) that can efficiently dry pellets (15), avoiding the known space problem, and prevent pellets (15) from agglomerating when they are molten.

In the resin pellet dryer (1), a pellet containing section (5) formed by laying a plurality of tubes (7) horizontally in parallel with each other and adapted to contain pellets in the inside, screw feeders (11) arranged in the respective tubes (7), vacuum means (19) for establishing a predetermined vacuum level in the inside of the pellet containing section (5), heaters (21) arranged at the respective tubes (7) so as to heat the inside of the pellet containing section (5) to a predetermined temperature level, shutters (23,25) arranged respectively at the uppermost tube and at the lowermost tube of the pellet containing section (5), and control means (17) for controlling the actuators (27,29), the electric motors (9) for screw feeders (11) and the vacuum means (19a) for operation and the heaters (21) for temperature.

## Description

### BACKGROUND OF THE INVENTION

### Field of the Invention

This invention relates to a resin pellet dryer for pre-drying pellets that are used as molding raw material for molding molded products.

### Related Background Art

Known resin pellet dryers are provided with a hopper-type dryer that is arranged upstream relative to the feeder for feeding resin pellets to a molding machine (see, especially, Japanese Patent Application Laid-Open Publication No. 2001-150436). The resin pellet dryer is adapted to appropriately dry the pellets that are fed into the hopper typically by means of a heater and then send them to the feeder.

However, known resin pellet dryers require a large space for installation because the hopper of the dryer is a large hollow cylinder. Such a large hopper can obstruct an efficient arrangement of various pieces of equipment in the molding plant when it is placed somewhere around the molding machine. Additionally, some of the pellets in the hopper can be molten to agglomerate by heat emitted from the heater. Then, they can no longer be delivered from the hopper. Known hoppers of the type under consideration are adapted to prevent molten pellets from agglomerating by vibrating the hopper. However, this arrangement is accompanied by a problem that the dryer itself needs to have further increased dimensions.

Therefore, the object of the present invention is to provide a resin pellet dryer that can efficiently dry pellets, avoiding the above identified space problem, and prevent pellets from agglomerating when they are molten.

### BRIEF DESCRIPTION OF THE DRAWINGS

FIG. 1 is a schematic illustration of the configuration of the first embodiment of resin pellet dryer according to the invention;
FIG. 2 is a schematic lateral view of one of the horizontal tubes and the related screw feeder of the resin pellet dryer of FIG. 1;
FIG. 3 is a schematic partial cross sectional view of the screw feeder of FIG. 2, illustrating the structure of the front end part thereof;
FIG. 4 is a schematic illustration of the configuration of the second embodiment of resin pellet dryer according to the invention;
FIG. 5 is a schematic lateral view of one of the horizontal tubes and the related screw feeder of the resin pellet dryer of FIG. 4;
FIG. 6 is a schematic partial cross sectional view of the screw feeder of FIG. 5, illustrating the structure of the front end part thereof; and
FIG. 7 is a schematic illustration of the gas discharge mechanism of the resin pellet dryer of FIG. 4.

### DETAILED DESCRIPTION OF THE PREFERRED EMBODIMENTS

Now, the present invention will be described in greater detail by referring to the accompanying drawings that illustrate preferred embodiments of the invention.

### [1st Embodiment]

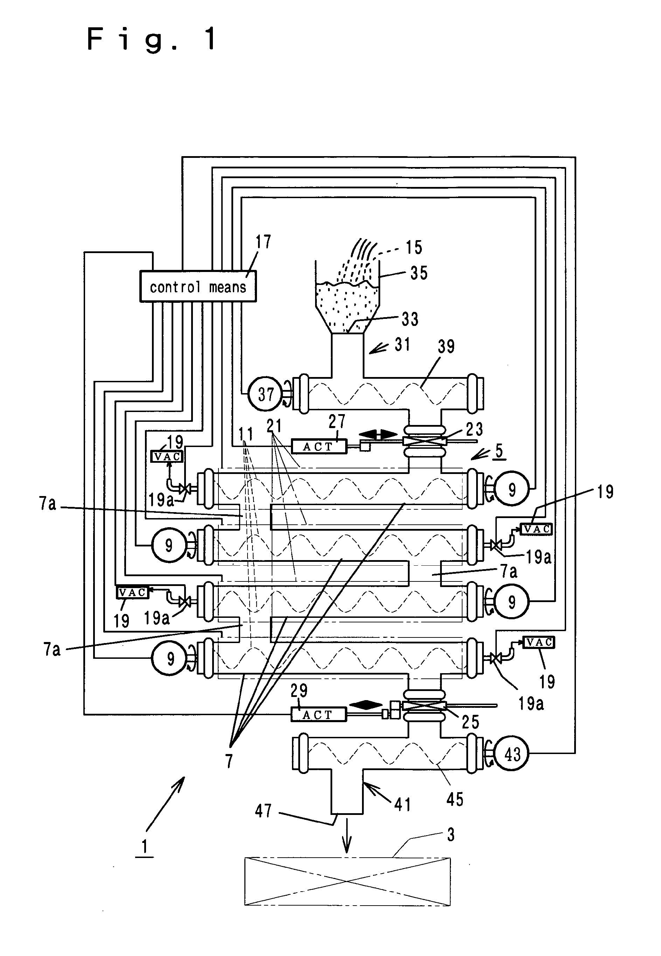

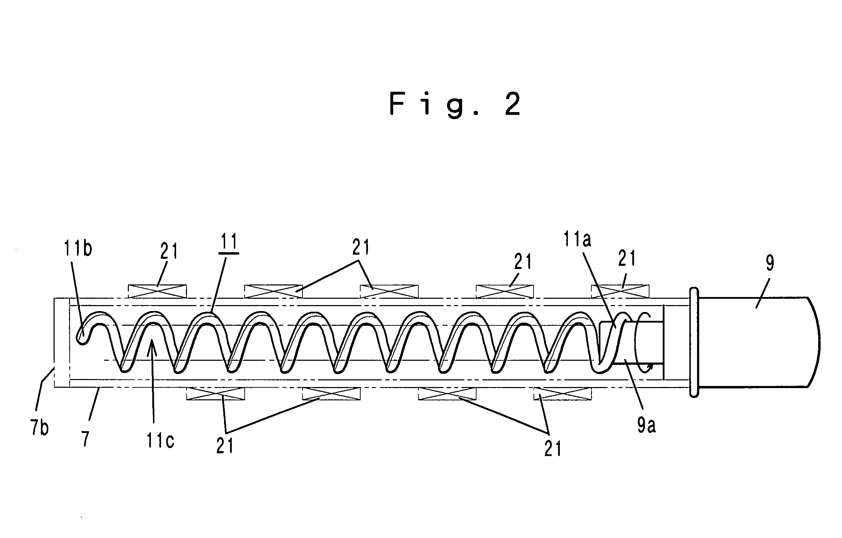

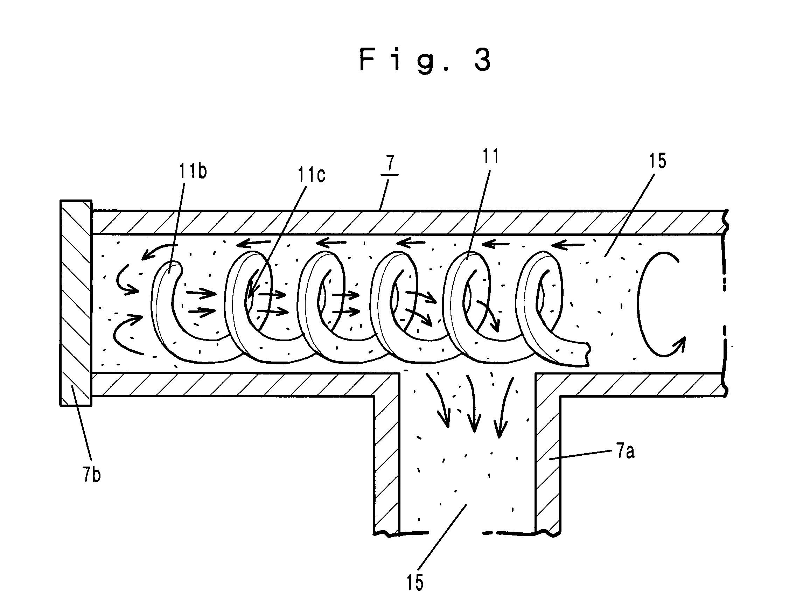

Referring to FIGS. 1 through 3, the resin pellet drier 1 is adapted to pre-dry pellets that are used as molding raw material for a plastic molding machine 3. It comprises a pellet containing section 5 that is horizontally directed and formed by linking a plurality of tubes 7 consisted of stainless steel pipes or the like, which are arranged inter-digitally in parallel with each other and laid one above the other (to be referred to as horizontal tubes hereinafter), at coupling sections 7a located near the ends of the respective tubes so as to make them communicate with each other.

Each of the horizontal tubes 7 is provided in the inside thereof with a screw feeder 11 that is adapted to be driven to revolve by an electric motor 9 and made of a resiliently deformable material such as spring steel. The screw feeder 11 has a fixed end 11a that is rigidly fitted to the rotary shaft 9a of the electric motor 9 and a free front end 11b. The screw feeder 11 has a hollow section 11c formed around the central axis thereof. The free front end 11b of the screw feeder 11 can be resiliently deformed depending on the volume of pellets 15 found around it so as to revolve appropriately. As the screw feeder 11 revolves, the pellets 15 in the horizontal tube 7 are stirred appropriately to prevent them from agglomerating and adhering to the inner surface of the front end 7b of the horizontal tube 7. The hollow section 11c of the screw feeder 11 operates to feed the pellets 15 that have been moved to the front end 7b of the horizontal tube 7 back to the base end through itself. With this arrangement, the screw feeder 11 moves the pellets 15 in the horizontal tube 7 so as to make them circulate in the tube and stir them efficiently.

A vacuum means 19 is connected to the end of each of the horizontal tubes 7 opposite to the end where the electric motor 9 is arranged by way of a valve 19a in order to hold the inside of the horizontal tube 7 to a predetermined vacuum level. More specifically, the internal pressure of each of the horizontal tubes 7 is held to a predetermined level by opening/closing the valve 19a according to the control command (signal) transmitted from a control means 17.

Each of the horizontal tubes 7 is provided at the outside thereof with a heater 21 of a predetermined heat emitting body in order to heat the inside of the horizontal tube 7 so as to appropriately heat the pellets 15 therein. The heating operation of the heater 21 is controlled according to the command (signal) transmitted from the control means 17.

The front end 7b of each of the horizontal tubes 7 where the screw feeder 11, the electric motor 9 and the valve 19a are arranged is adapted to be removably placed in position typically by means of an operation lever (not shown) so that the inside of the horizontal tube 7 can be cleaned with ease.

Each Of the horizontal tubes 7 of the pellet containing section 5, the uppermost horizontal tube 7 is provided with a supply side shutter 23 so that the supply of pellets 15 into the pellet containing section 5 is controlled by operating the supply side shutter 23, whereas the lowermost horizontal tube 7 is provided with a delivery side shutter 25 so that the delivery of pellets 15 from the inside of the pellet containing section 5 is controlled by operating the delivery side shutter 25. The supply side shutter 23 and the delivery side shutter 25 are driven to be opened and closed by respective actuators 27, 29 typically by means of pressurized air or an electromagnetic solenoid. The operation of the actuator 27 and that of the actuator 29 are controlled according to the respective commands (signals) transmitted from the control means 17.

A pellet supply section 31 is arranged above the supply side shutter 23 that is fitted to the uppermost horizontal tube 7 for the purpose of supplying pellets 15 to the pellet containing section 5. The pellet supply port 33 of the pellet supply section 31 is connected to a hopper 35 that is adapted to temporarily store pellets 15. The pellet supply section 31 is provided with a screw feeder 39 that is linked to an electric motor 37 in order to supply pellets 15 to the supply side shutter 23. Similarly, a pellet delivery section 41 is arranged below the delivery side shutter 25 that is fitted to the lowermost horizontal tube 7 for the purpose of delivering the pellets 15 coming from the delivery side shutter 25 to the plastic molding machine 3 connected to pellet delivery port 47 by means of the rotary motion of a screw feeder 45 that is linked to an electric motor 43. The operation of the electric motor 37 and that of the electric motor 43 are controlled according to the respective commands (signals) transmitted from the control means 17.

Note that the control means 7 is consisted of a computer formed mainly by a microprocessor unit (MPU), and controls operation, driving or the like based on various control data pre-stored in a ROM.

Now, the operation of drying pellets 15 of the resin pellet dryer 1 will be described below.

Firstly, as the supply side shutter 23 is opened, pellets 15 are supplied from the pellet supply port 33 of the pellet supply section 31 into the uppermost horizontal tube 7 by the rotary motion of the screw feeder 39. The pellets 15 fed into the uppermost horizontal tube 7 are then transferred toward the front end 7b of the tube 7 by the rotary motion of the screw feeder 11 in the tube 7 and subsequently further into the immediately lower horizontal tube 7 by way of the coupling section 7a located near the front end 7b of the tube 7. This pellet transfer operation continues so that the pellets 15 eventually get to the lowermost horizontal tube 7. Note that the delivery side shutter 25 arranged at the lowermost horizontal tube 7 is closed at this stage of operation.

As the inside of the pellet containing section 5 is filled with a predetermined volume of pellets 15, the supply side shutter 23 is closed and then the valve 19a is opened to exhaust air from the inside of the horizontal tubes 7 in order to establish a certain vacuum level in the inside. At the same time, the heaters 21 are operated while the horizontal tubes 7 are internally held in the vacuum condition in order to heat the respective horizontal tubes 7 and evaporate the moisture of the pellets 15 in the inside. As the horizontal tubes 7 are internally heated in the vacuum condition, the electric motors 9 are driven appropriately to by turn drive the respective screw feeders 11 to revolve and stir the pellets 15 filled in the respective horizontal tubes 7. As the pellets 15 are stirred, a hollow space is formed in the central part of each of the screw feeders 11 so that the pellets 15 that are being transferred in each of the horizontal tubes 7 would not be compressed to agglomerate at and adhere to the downstream end thereof. Thus, pellets 15 are efficiently dried while they are being agitated.

Additionally, since the inside of each of the horizontal tubes 7 is held to a predetermined vacuum level, the moisture contained in the pellets 15 in the pellet containing section 5 is boiled at a relatively low temperature level below 100°C so that the pellets 15 can be dried efficiently.

Still additionally, since the heaters 21 are arranged to almost entirely cover the respective horizontal tubes 7, each of the heaters 21 may be of a relatively low heat emission type. In other words, pellets 15 can be dried efficiently with a relatively low power consumption rate.

The above-described series of operation is controlled on the basis of the control data stored in the ROM of the control means 17 so as to eliminate moisture from the pellets 15 filled in the horizontal tubes 7 of the pellet containing section 5. When it is determined that the pellets 15 are free from moisture, the delivery side shutter 25 arranged at the lowermost horizontal tube 7 is opened to deliver the moisture-free pellets 15 to the plastic molding machine 3 by the rotation motion of the screw feeder 45 arranged in the pellet delivery section 41.

The pellet delivery operation is conducted automatically according to the control data stored in the ROM of the control means 17. As a result of installing the resin pellet dryer 1 integrally with the plastic molding machine 3, the molding operation of the plastic molding machine 3 is conducted automatically.

Thus, with this embodiment, the pellet containing section 5 can be down-sized because a plurality of horizontal tubes 7 are arranged in parallel with each other and one above the other in it. Additionally, since the number of horizontal tubes 7 can be selected depending on the desired capacity of the pellet containing section 5, resin pellet dryers 1 of various different types can be manufactured with different capacities in a simple manner. Still additionally, a large capacity resin pellet dryer 1 can be efficiently installed in a limited space by preparing a plurality of resin pellet dryers 1, each comprising a predetermined number of horizontal tubes 7, as so many units and arranging them in parallel.

### [2nd Embodiment]

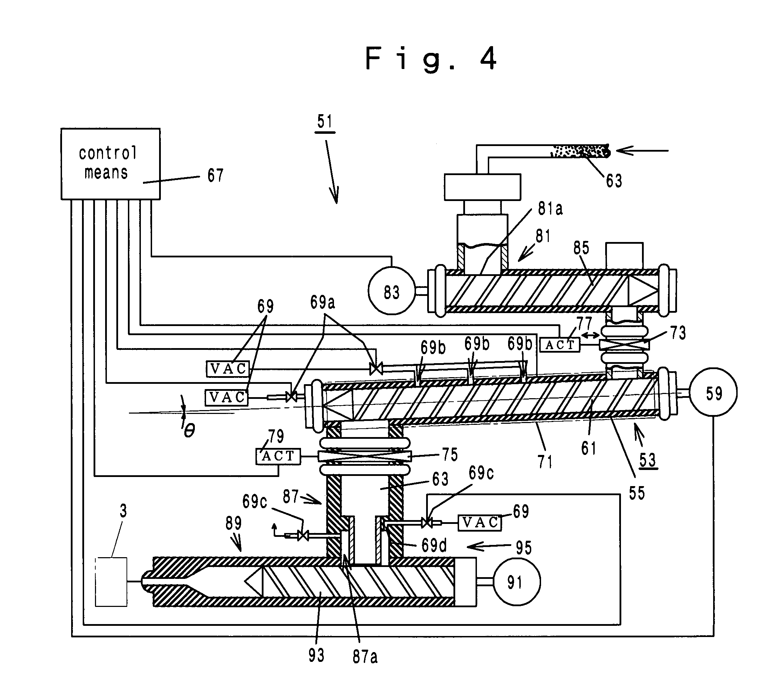

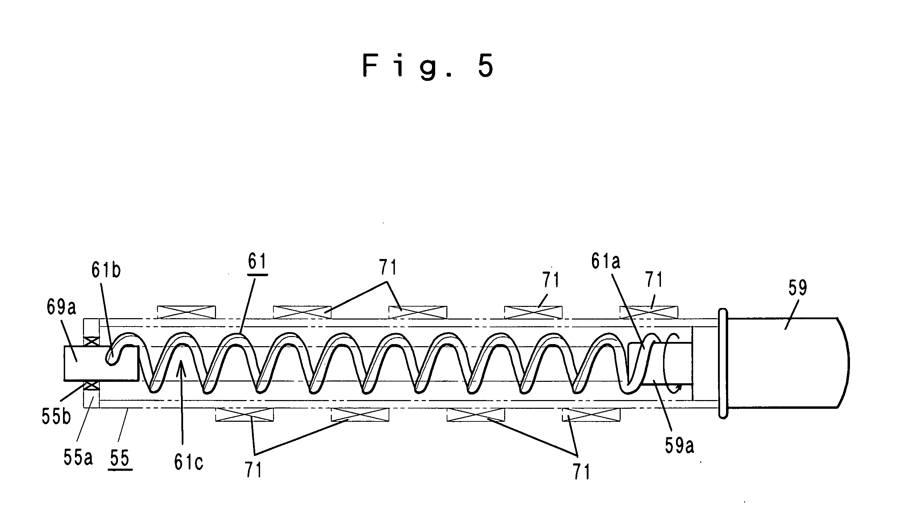

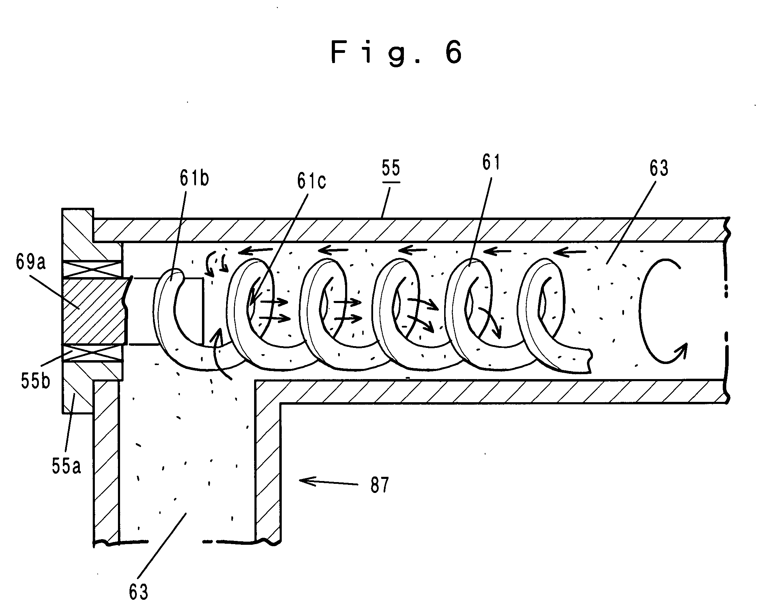

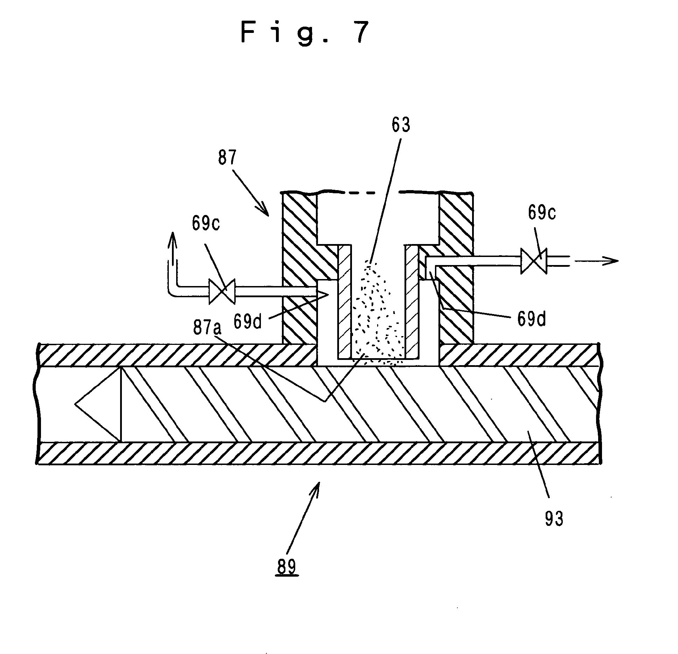

Referring to FIGS. 4 through 7, this embodiment of resin pellet dryer 51 comprises a pellet containing section 53 that is arranged substantially horizontally or with inclination of a predetermined angle (θ) relative to a horizontal direction and formed by a single tube 55 (to be referred to as inclined tube hereinafter) that is prepared by using a stainless steel pipe or the like. The angle of inclination (θ) has a value of several degrees so that the pellet containing section 53 is sloped down from the pellet supply section 81 toward the pellet delivery section 87 thereof.

The inclined tube 55 is provided with a screw feeder 61 that is coupled to an electric motor 59 so as to be driven to revolve in a predetermined sense as the electric motor 59 is driven to operate. More specifically, the screw feeder 61 has a fixed end 61a that is coupled to the rotary shaft 59a of the electric motor 59. The front end 61b of the screw feeder 61 that is opposite to the fixed end 61a is supported by the front end 55a of the inclined tube 55 by way of a bearing 55b. The screw feeder 61 is made of a resiliently deformable material such as spring steel and has a hollow section formed around the central axis thereof. The screw feeder 61 having the hollow section 61c allows pellets 63 being transferred forward in the inclined tube 55 to return to the original position by way of the hollow section 61c after getting to the front end 55a of the inclined tube 55. Additionally, the pellets 63 can move smoothly in the inclined tube 55 because the tube 55 is inclined by the predetermined angle (θ) relative to a horizontal direction. The operation of the electric motor 59 that drives the screw feeder 61 to revolve is controlled according to the command (signal) from the control means 67.

Vacuum means 69 are connected respectively to the end opposite to the electric motor 59 and an appropriate position of the outer peripheral surface of the inclined tube 55 by way of valves 69a in order to hold the inside of the inclined tube 55 to a predetermined vacuum level. Vacuum ports 69b may be arranged linearly or peripherally. A vacuum condition can be established in the inclined tube 55 and the pellets 63 can be dried efficiently when the vacuum ports 69b are arranged at the outer peripheral surface of the inclined tube 55. The opening and closing operation of each of the valves 69a of the vacuum means 69 is controlled by the control command (signal) from the control means 67.

The inclined tube 55 is provided at the outside thereof with a heater 71 in order to heat the inside of the inclined tube 55 to a predetermined temperature level so as to appropriately heat the pellets 63 therein. The heating operation of the heater 71 is controlled according to the command (signal) transmitted from the control means 67.

The front end 55a of the inclined tubes 55 where the screw feeder 61, the electric motor 59 and the valve 69a for producing vacuum are arranged is adapted to be removably placed in position typically by a one-tough operation of an operation lever or the like.

The inclined tube 55 is provided at an upstream part and at a downstream part thereof respectively with a supply side shutter 73 for controlling the supply of pellets to the inside of the inclined tube 55 and a delivery side shutter 75 for controlling the delivery of pellets from the inside. The supply side shutter 73 and the delivery side shutter 75 are driven to be opened and closed by respective actuators 77, 79 typically by means of pressurized air or an electromagnetic solenoid. The operation of the actuator 77 and that of the actuator 79 are controlled according to the respective commands (signals) transmitted from the control means 67.

A pellet supply section 81 is arranged upstream relative to the supply side shutter 73 for the purpose of supplying pellets 63 to the supply side shutter 73 and a screw feeder 85 is arranged in the pellet supply section 81 and coupled to an electric motor 83 in order to transfer the pellets 63 supplied to the pellet supply port 81a to the supply side shutter 73.

A pellet delivery section 87 is arranged downstream relative to the delivery side shutter 75 for the purpose of moving the pellets 63 that are delivered from the delivery side shutter 75 to a feeder unit 89 connected to the plastic molding machine 3 by way of pellet delivery port 87a of the pellet delivery section 87. The feeder unit 89 is adapted to transfer pellets 63 as a screw feeder 93 that is coupled to electric motor 91 is driven to revolve. The operation of the electric motor 91 of the feeder unit 89 is controlled according to the control command (signal) from the control means 67.

A gas discharge mechanism 95 is arranged between the downstream end of the delivery side shutter 75 and the feeder unit 89. The gas discharge mechanism 95 is connected to a vacuum means 69 by way of valves 69c and gas discharge ports 69d so that gas is discharged as a predetermined vacuum level is established in the connection zone. The opening and closing operation of each of the valves 69c of the gas discharge mechanism 95 is controlled by the control command (signal) from the control means 67.

The control means 67 is similar to the control means 17 of 1st Embodiment and hence will not be described any further.

Now, the operation of the resin pellet dryer 61 of this embodiment will be described below.

Firstly, as the supply side shutter 73 is opened, the pellets 63 that are supplied from the pellet supply port 81a of the pellet supply section 81 is led into the inclined tube 55 by the rotary motion of the screw feeder 85. The pellets 63 fed into the inclined tube 55 are then transferred toward the front end 55a of the tube 55 by the rotary motion of the screw feeder 61. As the inside of the pellet containing section 53 is filled with a predetermined volume of pellets 63, the supply side shutter 73 is closed. Under this condition, the valve 69a is opened to exhaust air from the inside of the inclined tube 55 in order to establish a certain vacuum level in the inside. At the same time, the heater 71 is operated while the inclined tube 55 is internally held in the vacuum condition in order to heat the filled pellets 63 by way of the inclined tube 55 and evaporate the moisture of the pellets 63 in the inside.

Under this condition, the screw feeder 61 is driven to revolve appropriately and stir the pellets 63 filled in the inclined tube 55. At this stage of operation, the screw feeder 61 is driven in a switched manner to revolve, for example, forwardly by two turns and then backwardly by three turns so as to efficiently drive off moisture from the pellets 63.

When it is determined that the pellets 63 are free from moisture, the delivery side shutter 75 is opened to discharge the pellets 63 from the inclined tube 55 and deliver them to the feeder unit 89. After delivering a necessary volume of pellets 63 to the feeder unit 89, the delivery side shutter 75 is closed and then the valve 69b of the gas discharge mechanism 95 arranged at the pellet delivery section 87 is opened to establish a certain vacuum level and drive off the gas and the steam generated in the plastic molding machine 3. With this arrangement, the quality of the molded products can be improved. Since the delivery side shutter 75 is closed, any gas and steam that are generated during the molding operation are prevented from flowing into the pellet containing section 53.

The above-described series of operation is controlled automatically according to the control data stored in the ROM of the control means 67. As a result of installing the resin pellet dryer 51 integrally with the plastic molding machine 3, the molding operation of the plastic molding machine 3 is conducted automatically.

This embodiment provides a remarkable advantage of downsizing the resin pellet dryer 51 and reducing the space necessary for installing the resin pellet dryer 51 because the pellet containing section 53 is formed by a single inclined tube 55.

## Claims

1. A resin pellet dryer comprising:
a pellet containing section formed by laying a plurality of tubes horizontally in parallel with each other and one above the other and linking them together so as to make them communicate with each other and adapted to contain pellets in the inside;
screw feeders arranged in the respective tubes and adapted to be driven by respective electric motors connected to them;
vacuum means for establishing a predetermined vacuum level in the inside of the pellet containing section;
heaters arranged at the respective tubes so as to heat the inside of the pellet containing section to a predetermined temperature level;
shutters arranged respectively at the uppermost tube and at the lowermost tube of the pellet containing section and adapted to be opened and closed by respective actuators so as to supply pellets into and deliver pellets from the pellet containing section; and
control means for controlling the actuators, the electric motors and the vacuum means for operation and the heaters for temperature.

2. A resin pellet dryer comprising:
a pellet containing section formed by a horizontally arranged single tube and adapted to contain pellets in the inside;
a screw feeder arranged in the tube and adapted to be driven to revolve by an electric motor linked to it;
vacuum means for establishing a predetermined vacuum level in the inside of the pellet containing section;
a heater for heating the inside of the pellet containing section to a predetermined temperature level;
a supply side shutter arranged at a pellet supply section located at one of the ends of the tube and adapted to be opened and closed by an actuator;
a delivery side shutter arranged at a pellet delivery section located at the other end of the tube and adapted to be opened and closed by an actuator; and
control means for controlling the actuators, the electric motor and the vacuum means for operation and the heater for temperature.

3. A resin pellet dryer comprising:
a pellet containing section formed by a single inclined tube arranged to show a predetermined angle relative to a horizontal direction and adapted to contain pellets in the inside;
a screw feeder arranged in the inclined tube and adapted to be driven to revolve by an electric motor linked to it;
vacuum means for establishing a predetermined vacuum level in the inside of the pellet containing section;
a heater for heating the inside of the pellet containing section to a predetermined temperature level;
a supply side shutter arranged at a pellet supply section located at one of the ends of the inclined tube and adapted to be opened and closed by an actuator;
a delivery side shutter arranged at a pellet delivery section located at the other end of the inclined tube and adapted to be opened and closed by an actuator; and
control means for controlling the actuators, the electric motor and the vacuum means for operation and the heater for temperature.

4. A resin pellet dryer according to claim 1, wherein each of the screw feeders is supported at an end so as to be linked to and driven to revolve by an electric motor and has a hollow section formed around the central axis thereof.

5. A resin pellet dryer according to any of claims 1 through 3, wherein the tube or each of the tubes is formed by a cylindrical steel pipe and provided with a heater wound around the outer periphery thereof.

6. A resin pellet dryer according to claim 2 or 3, wherein the screw feeder is linked at an end to an electric motor so as to be driven to revolve and supported at the other end by the front end wall of the tube by way of a bearing, the screw feeder having a hollow section formed around the central axis thereof.

7. A resin pellet dryer according to claim 2 or 3, wherein the tube is provided with a coupling section for transferring the pellets delivered to the downstream side of the delivery side shutter arranged at the other end to a feeder unit of a plastic molding machine, the coupling section being provided with a gas discharge mechanism for discharging the gas discharged from the metal mold side of the plastic molding machine.
